(19) Europäisches Patentamt
European Patent Office
Office européen des brevets

(11) EP 0 598 554 B1

(12) EUROPEAN PATENT SPECIFICATION

(45) Date of publication and mention
of the grant of the patent:
**12.05.1999 Bulletin 1999/19**

(51) Int Cl.6: **H04B 10/18**, G02B 6/22

(21) Application number: 93308997.1

(22) Date of filing: 11.11.1993

(54) **Negative dispersion optical fiber**

Optische Faser mit negativer Dispersion

Fibre optique avec dispersion négative

(84) Designated Contracting States:
**DE FR GB IT**

(30) Priority: **18.11.1992 US 978002**

(43) Date of publication of application:
**25.05.1994 Bulletin 1994/21**

(73) Proprietor: **AT&T Corp.**
**New York, NY 10013-2412 (US)**

(72) Inventors:
• **Vengsarkar, Ashish Madhukar**
**Allentown, Pennsylvania 18103 (US)**
• **Walker, Kenneth Lee**
**New Providence, New Jersey 07974 (US)**

(74) Representative:
**Watts, Christopher Malcolm Kelway, Dr. et al**
**Lucent Technologies (UK) Ltd,**
**5 Mornington Road**
**Woodford Green Essex, IG8 0TU (GB)**

(56) References cited:
**EP-A- 0 307 228**

• **OPTICS LETTERS, vol.18, no.11, 1 June 1993, NEW YORK, US pages 924 - 926 VENGSARKAR ET AL.**
• **NACHRICHTENTECHNIK ELEKTRONIK, vol.42, no.5, September 1992, BERLIN DD pages 184 - 187 R.BONESS, W.NOWAK**
• **JOURNAL OF LIGHTWAVE TECHNOLOGY., vol.LT-4, no.11, November 1986, NEW YORK US pages 1651 - 1654 RÜHL**
• **OPTICS LETTERS, vol.17, no.21, 1 November 1992, NEW YORK, US pages 1503 - 1505 VENGSARKAR**
• **ELECTRONICS LETTERS, 16 JULY 1992, UK, VOL. 28, NR. 15, PAGE(S) 1469 - 1471, ISSN 0013-5194 IZADPANAH H ET AL 'Dispersion compensation in 1310 nm-optimised SMFs using optical equaliser fibre, EDFAs and 1310/1550 nm WDM'**
• **IEEE JOURNAL OF QUANTUM ELECTRONICS, vol.QE-18, no.4, April 1982, NEW YORK US pages 535 - 542 MONERIE**
• **PATENT ABSTRACTS OF JAPAN vol. 12, no. 6 (P-653) 9 January 1988 & JP-A-62 165 608 (FUJITSU) 22 July 1987**
• **PATENT ABSTRACTS OF JAPAN vol. 15, no. 487 (P-1286) 10 December 1991 & JP-A-03 211 530 (MITSUBISHI ELECTRIC) 17 September 1991**

## Description

## Field of the Invention

This invention pertains to dispersion-compensating (DC) optical waveguides, typically optical fiber, and to communication systems and other articles that comprise a DC optical waveguide.

## Background of the Invention

It is well known that conventional $SiO_2$-based single mode optical fiber generally has minimum loss at about 1.55μm and zero chromatic dispersion at about 1.3 μm. Although it is possible to design optical fiber to have both minimum loss and zero chromatic dispersion at about 1.55μm (such fiber is generally referred to as "dispersion-shifted" fiber), most presently installed single mode fiber is of the conventional type and is operated at a signal wavelength of about 1.3μm, at or close to the zero chromatic dispersion wavelength of the fiber.

Considerable advantages could be realized if already installed optical fiber systems could be operated at 1.55μm. These advantages include the possibility of increased distance between repeaters (due to the lower fiber loss), and the possibility of using Er-doped fiber amplifiers (EDFAs) instead of repeaters. However, straight-forward upgrade by changing operating wavelength is not practical, due to the significant amount (exemplarily about 17 ps/nm·km) of chromatic dispersion of conventional $SiO_2$-based single mode fiber at 1.55μm. The dispersion typically would limit such a system to a bit rate of at most about 2 Gbit/sec for distances of order 500 miles.

Several possible ways of dealing with the problem have recently been proposed. These can be divided into "active" and "passive" techniques. Herein we are only concerned with passive techniques, in particular, with techniques that involve use of dispersion-compensating (DC) fiber. U.S. patent 4,261,639 discloses dispersion compensation by catenation of single mode fibers of respectively positive and negative dispersion at the operating wavelength.

R. Boness and W. Nowak (Nachrichtentechnik Elektronik, vol. 42, no. 5, September 1992, Berlin D, pages 184-187) disclose dispersion compensating fibres with negative dispersion considering the behaviour of $LP_{11}$ mode. F. Rühe (Journal of Lightwave Technology, vol. LT-4, no. 11, November 1986, New York US, pages 1651-1654) discloses QC fibres which support $LP_{01}$ and $LP_{02}$ modes.

DC fiber not only can advantageously be used to upgrade an existing fiber optic communication system but could also be used in new systems (e.g., transoceanic submarine systems that use dispersion-shifted fiber) that are designed to operate at 1.55μm, e.g., to ease manufacturing specifications on the dispersion-shifted fiber.

C. D. Poole et al., (Optics Letters, Vol. 17(14), p. 985; see also co-assigned U.S. patent application Serial No. 766,600, filed September 26, 1991) disclose a DC fiber designed to support, in addition to the lowest order mode ($LP_{01}$), also the lowest higher order mode ($LP_{11}$), and also designed to have a cut-off wavelength for the $LP_{11}$ ($\lambda_{c11}$) mode just slightly above the operating wavelength ($\lambda_{op}$). Typically, at the upstream end of the DC fiber a mode converter is provided to convert the $LP_{01}$ mode into the $LP_{11}$ mode, and at the downstream end of the DC fiber another mode converter is provided to convert the $LP_{11}$ mode back into the $LP_{01}$ mode. The technique of Poole et al. is able to compensate both dispersion and dispersion slope and can yield desirably large values of negative dispersion (absolute value >100 or 150 ps/nm·km; exemplarily -228 ps/nm·km). However, the Poole et al. technique undesirably requires use of special components (mode converters and polarization rotators) which not only add cost but also typically introduce additional loss. Furthermore, typically only about 15-20% of the total power propagates within the core, owing to the proximity of $\lambda_{op}$ to $\lambda_{c11}$, typically resulting in relatively high loss. Still furthermore, the prior art technique typically requires slightly elliptical DC fiber to remove the four-fold degeneracy of the $LP_{11}$ mode.

A. J. Antos, (Proceedings, Conference on Optical Fiber Measurements, National Institute of Science and Technology, Colorado, September 1992, p. 89) discloses DC fibers that are designed to support only the $LP_{01}$ mode and to have negative chromatic dispersion at 1.55μm. The disclosed DC fibers have relatively small negative chromatic dispersion (absolute value ≤100 ps/nm·km; exemplarily -65 ps/nm·km), necessitating the use of long lengths (e.g., 39 km of DC fiber to compensate the dispersion of 150 km of conventional fiber) of DC fiber. Furthermore, the Antos technique apparently is practical only for dispersion compensation, with dispersion slope compensation being considered "... not easily achieved in practice ..." by the author.

In view of the considerable commercial significance of DC, a technique that avoids or at least mitigates the shortcomings of prior art DC techniques would be highly desirable. This application discloses such a technique, and articles that embody the inventive technique.

## Glossary and Definitions

The "modes" $LP_{\mu\nu}$ are conventionally used in discussions of modal properties of optical fibers, although they are not true but only approximate solutions of the relevant wave equation. The fundamental LP mode is $LP_{01}$. The lowest higher order LP mode is $LP_{11}$. $LP_{0m}$ is of higher order than $LP_{11}$, with m = 2, 3, ........

The term "chromatic dispersion" is herein used in the conventional manner and refers to the sum of material dispersion and waveguide dispersion.

A waveguide "supports" propagation of a given mode of radiation of wavelength $\lambda_{op}$ if the cut-off wavelength $\lambda_c$ of the mode is longer than $\lambda_{op}$, and does not "support" propagation of a given mode if $\lambda_c$ of the mode is shorter than $\lambda_{op}$. In conventional fiber designs the cut-off wavelength of the $LP_{11}$ mode is greater than that of the $LP_{02}$ mode.

## Brief Description of the Drawings

FIGs. 1 and 4 schematically depict exemplary refractive index profiles of DC fiber according to the invention;
FIGs. 2 and 5 show the dispersion of fiber of FIGs. 1 and 4, respectively, as a function of wavelength; and
FIG. 3 schematically depicts an exemplary fiber communication system according to the invention. If the dispersion of the conventional waveguide is positive at $\lambda_{op}$, then the DC fiber is designed to have negative dispersion at $\lambda_{op}$.

## The Invention

The invention is as defined by the claims. In a broad aspect the invention is embodied in a novel optical waveguide and in articles that comprise the waveguide. The waveguide is designed to have a relatively large absolute value of chromatic dispersion at an operating wavelength $\lambda_{op}$ ($|D_{DC}(\lambda_{op})|$, where $D_{DC}(\lambda)$ is the chromatic dispersion of the novel waveguide at wavelength $\lambda$), with the sign of the chromatic dispersion being opposite that of the dispersion of a conventional waveguide at $\lambda_{op}$. Optionally, the novel waveguide also has a predetermined value of the dispersion slope at $\lambda_{op}$. In view of its characteristics the novel waveguide can advantageously serve as DC waveguide. Typically, but not necessarily, the optical waveguide is an optical fiber. Those skilled in the art will appreciate that the principles of the invention also apply to non-circular waveguides such as planar waveguides. However, the remainder of the discussion will be in terms of optical fiber.

More particularly, the invention is typically embodied in an article that comprises a length $L_{DC}$ (not necessarily one continuous piece of fiber) of an optical fiber that is designed to support the propagation of radiation of wavelength $\lambda_{op}$ in the fundamental mode ($LP_{01}$) and at least one higher order mode, and the $LP_{01}$ mode has negative chromatic dispersion at $\lambda_{op}$ whose absolute value typically is greater than 150 ps/nm·km. DC fibers having $|D_{DC}(\lambda_{op})|<100$ or even 150 ps/nm·km typically would require the use of relatively long lengths of DC fiber to compensate the dispersion of conventional optical fiber and for that reason are currently not considered desirable.

Typically, the fiber has a refractive index profile selected such that the fiber does not support propagation of the lowest higher order mode ($LP_{11}$) at $\lambda_{op}$ but does support propagation of at least one higher order mode (typically $LP_{0m}$, where m ......; preferably m = 2) other than $LP_{11}$ at $\lambda_{op}$. = 2, 3, Equivalently, the fiber has an index profile that is selected such that there exists a wavelength $\lambda_{op}$ (typically a range of wavelengths) at which the fiber supports the $LP_{01}$ mode and at which the cut-off wavelength of the $LP_{11}$ mode ($\lambda_{c11}$) is less than the cut-off wavelength of at least one $LP_{0m}$ mode ($\lambda_{c0m}$), typically less than $\lambda_{c02}$, the cut-off wavelength of the $LP_{02}$ mode.

In a currently preferred embodiment, the optical fiber is a $SiO_2$-based (i.e., containing everywhere more than 50 mole % $SiO_2$) optical fiber, $\lambda_{op}$ is about 1.55μm, the fiber supports the propagation of $LP_{02}$ but not of $LP_{11}$ at $\lambda_{op}$, and the fiber has $D_{DC}(\lambda_{op})$ more negative than -150 ps/nm·km. Optionally the DC fiber also has a predetermined negative value of the dispersion slope ($D'_{DC}$) at $\lambda_{op}$.

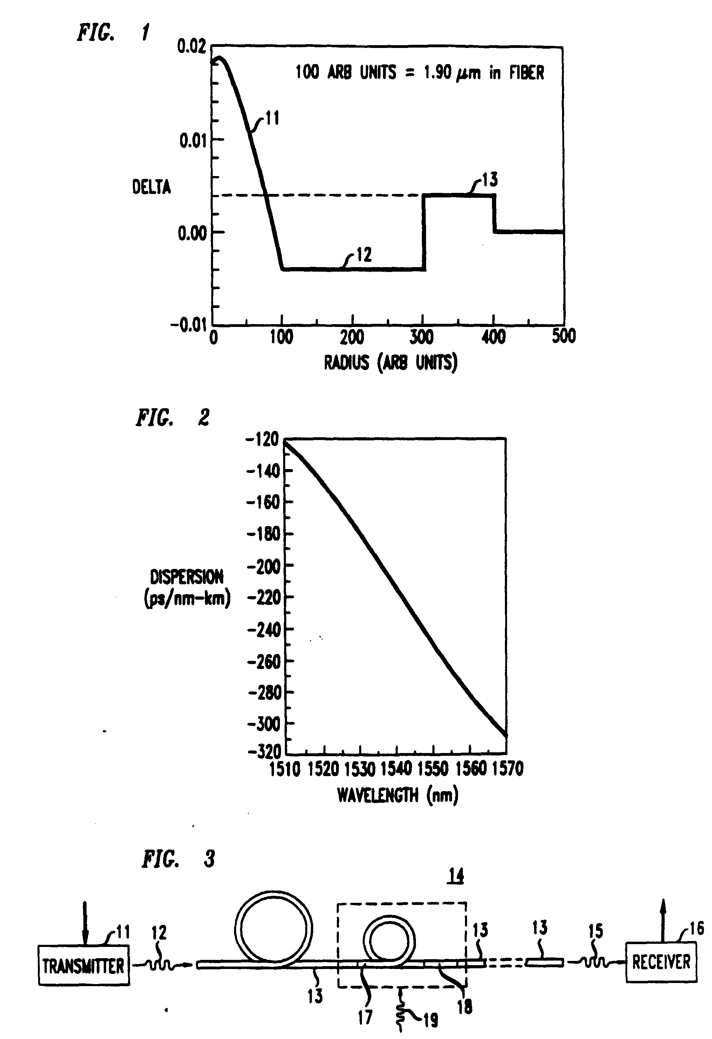

FIG. 1 shows the nominal refractive index profile of an exemplary optical fiber according to the invention. Although the radius is expressed in arbitrary units, the profile can also be considered to be quantitative since 100 arbitrary radial units correspond, in a particular embodiment, to 1.9μm in the fiber. Those skilled in the art know that actual fiber profiles typically depart somewhat from the (ideal) nominal profiles that form the basis of design calculations. However, the properties of actual fibers typically closely correspond to the computed properties of the corresponding models that use nominal fiber profiles, and it is common practice to base new fiber designs on computer simulations.

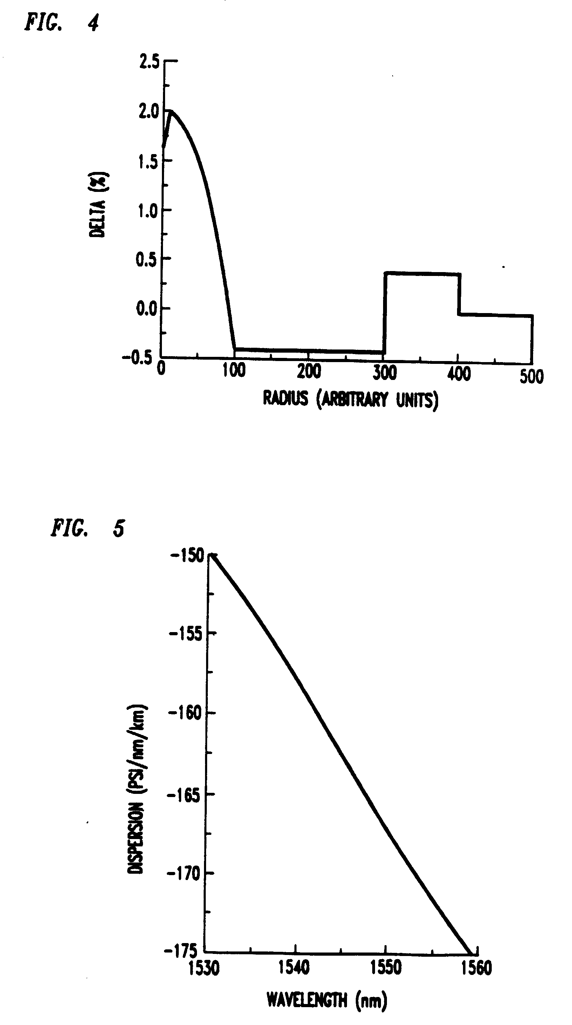

The profile of FIG. 1 comprises core 11, first cladding region (trench) 12, second cladding region (ridge) 13, and third cladding region 14. The exemplary profile of FIG. 1 corresponds to a fiber having a core diameter of 3.8μm, a maximum core $\Delta$ of about 0.019, an outer trench radius of 5.7μm, a trench $\Delta$ of about -0.004, an outer ridge radius of 7.6μm, a ridge $\Delta$ of about 0.004, and a third cladding region wherein $\Delta = 0$. The third cladding region extends to the fiber surface. The parameter $\Delta$ is defined in the conventional manner, namely $\Delta(r) = (n(r)-n_o)/n_o$, where $n_o$ is the refractive index of pure vitreous $SiO_2$. The ridge is selected to support the $LP_{02}$ mode. Generally speaking, if it is desired that a DC fiber support the $LP_{0m}$ mode, then the fiber exemplarily can have m-1 appropriately placed ridges. A further exemplary refractive index profile is shown in FIG. 4. The core has a power law profile, with $\alpha = 2.2$, and 300 arbitrary (radial) units correspond to 5 μm in the fiber.

Typically, DC fiber according to the invention will comprise the above referred to core and first-third cladding regions. The first cladding region will be immediately adjacent to the core and have a refractive index that is lower than the refractive index of any region outside of the first cladding region. The refractive index of the second cladding region will have a value between the maximum core refractive index and the first region refractive index, and the position of the second cladding region will be selected such that the desired higher order mode (e.g., $LP_{02}$) is excited before $LP_{11}$. Finally the third cladding region will have a refractive index of value between that of the first and second cladding regions. Frequently the third cladding region will comprise nominally pure silica.

Exemplarily, a fiber according to the invention (for m = 2) typically will have a generic power-law core profile, with maximum $\Delta$ in the core typically greater than 0.015, a trench with $\Delta$ typically <-0.003, and a ridge with $\Delta > 0$, and furthermore chosen such that $\lambda_{c02} > \lambda_{c11}$.

The presence of i) a relatively large index difference between the high $\Delta$ core and the trench and ii) the raised ridge makes it possible for the $LP_{01}$ mode to have a finite cut-off wavelength, i.e., above a finite wavelength $\lambda_{c01}$ the $LP_{01}$ mode is leaky or non-guided. As a consequence of this property the propagation constant of the $LP_{01}$ mode approaches zero at a relatively fast rate near $\lambda_{c01}$, as compared to the relatively slow approach to zero in a conventional fiber. Since the propagation constant approaches zero rapidly, the first and second derivatives (with respect to wavelength) of the propagation constant (which define the dispersion of the fiber) are large, a property that is generally desirable for dispersion compensation. Furthermore, the operation of $LP_{01}$ relatively close to $\lambda_{c01}$ can provide for both negative dispersion and negative dispersion slope.

The above theoretical remarks are offered as an aid to understanding but are not intended to limit the scope of the invention.

Fiber refractive index profiles that comprise a relatively high index core region surrounded by a relatively low index cladding region, in turn surrounded by an intermediate index cladding region which in turn is surrounded by a cladding region of refractive index lower than the intermediate index are known. See, for instance, FIG. 1 of U.S. patent 4,435,040. However, we know of nothing in the prior art that suggests that such a profile could be designed to meet the above disclosed criteria. Indeed, the prior art profiles pertain to optical fiber that is single mode at the design operating wavelength.

The fibers of FIGs. 1 and 4 can be made by conventional means. The core typically will be Ge-doped, the trench down-doped with F, the ridge lightly up-doped with Ge, and region 14 typically will be undoped $SiO_2$. The fiber of FIG. 1 has $\lambda_{c02}$ of about 1.600 $\mu$m, and $\lambda_{c11}$ of about 1.565 $\mu$m. Although FIG. 1 shows an approximately triangular (power-law exponent $\alpha$ = 1.5) core profile; this is not a necessary requirement, and other core profiles such as parabolic or step profiles could be used.

FIGs. 2 and 5 show the (computed) dispersion of the fibers of FIGs. 1 and 4, respectively, as a function of wavelength. As can be seen, the exemplary fibers have quite large (negative) dispersion (e.g., -260 ps/nm·km at 1550 nm), making them effective DC fibers. Exemplarily, the dispersion of 50 km of conventional single mode fiber (dispersion 17 ps/nm·km at 1.55$\mu$m) could be compensated with a mere 3.3 km of the exemplary fiber of FIG. 1.

Fiber according to the invention can be joined directly, without intermediate mode converter, to conventional single mode transmission fiber. Most of the optical power that is coupled into the inventive fiber will continue to propagate in the $LP_{01}$ mode, with only a minor portion of the power in the $LP_{02}$ mode. Due to the proximity of $\lambda_{op}$ to $\lambda_{c02}$, the $LP_{02}$ mode is quite susceptible to bending loss. This will typically be an advantage, since it facilitates removal of $LP_{02}$ mode power by simple means, e.g., coiling the length of DC fiber. Thus, it can be readily arranged that at the downstream end of the DC fiber essentially all of the optical power is in the $LP_{01}$ mode, facilitating direct joining to conventional single mode transmission fiber or other conventional components.

Furthermore, waveguides according to the invention not only can compensate chromatic dispersion but also the dispersion slope at a given system operating wavelength. By "dispersion slope" (designated herein D') at a wavelength $\lambda_{op}$ we mean the value of the first derivative of the chromatic dispersion with respect to wavelength at $\lambda_{op}$. Exemplarily, appropriate choice of fiber profile makes it possible to compensate the dispersion slope of standard single mode fiber such that the system can exhibit very low chromatic dispersion over a significant spectral region, e.g., have less than about 1.5 ps/nm·km dispersion over a wavelength range of at least 50 nm width in the 1.55$\mu$m wavelength region. This feature can be advantageously used in wavelength division multiplexed (WDM) systems.

Those skilled in the art will know that the dispersion slope of an optical fiber is proportional to the negative of the second derivative of the propagation constant with respect to the V-number of the fiber. Typically, conventional single mode fiber has a positive dispersion slope at 1.55$\mu$m. In order to compensate the dispersion slope $D'_{SM}$ of a given length $L_{SM}$ of conventional single mode fiber at, e.g., 1.55$\mu$m with a length $L_{DC}$ of DC fiber, the index profile of the DC fiber is selected such that, at the V-number that corresponds to $\lambda$ = 1.55$\mu$m, the above referred-to second derivative is positive and of magnitude such that the dispersion slope of the DC fiber ($D'_{DC}$) is substantially equal to $(D'_{SM})(L_{SM}/L_{DC})$. The selection can readily be made by computer modeling, using well known techniques. For instance, the fiber of FIG. 4 has dispersion at 1.55 $\mu$m more negative than 150 ps/km · nm, and has dispersion slope of about -0.8 ps/km · $nm^2$ at 1.55$\mu$m. Thus, about 4.4 km of that fiber can compensate the dispersion slope of 50 km of a single mode fiber having dispersion slope at 1.55$\mu$m of 0.07 ps/km · $nm^2$, a typical value.

Those skilled in the art will appreciate that an optical fiber communication system according to the invention can take many forms, and all such embodiments are contemplated. For instance, in order to upgrade a conventional (1.3μm) system, each regenerator can be replaced by an EDFA with associated length $L_{DC}$ of DC fiber according to the invention. Although it will generally be appropriate to insert a single length of DC fiber into each fiber span, this is not necessarily so. At least in principle it is possible to insert shorter pieces of DC fiber at several points of a span, or to insert all of the required DC fiber at a single location, e.g., at the receiver location or even at the transmitter. Since there is signal attenuation associated with DC fiber according to the invention, it will at times be appropriate to dope the core of the DC fiber with appropriate rare earth ions (e.g., $Er^{3+}$), and to provide an appropriate pump radiation source. In this manner a length of DC fiber can be made to appear substantially loss-less for signal radiation. Of course, DC fiber could also be rare earth-doped such that the fiber provides net gain, advantageously serving both as dispersion compensator and optical amplifier.

FIG. 3 schematically depicts an exemplary optical fiber communication system according to the invention, wherein numeral 12 refers to signal radiation emitted by transmitter 11 which is guided in transmission fiber 13 to optical amplifier/dispersion compensator 14, is then typically guided through further lengths of transmission fiber and further amplifiers/compensators (not shown) to receiver 16. Exemplarily the amplifier/compensator comprises a length of DC fiber 17 and EDFA 18. Pump radiation 19 is provided to combination 14, to be coupled into the EDFA. It will be appreciated that the functions of compensation and amplification could be performed by rare earth-doped DC fiber.

## Claims

1. An article comprising a length of dispersion compensating DC optical fiber designed to support propagation of radiation of wavelength $\lambda_{op}$ in a fundamental mode $LP_{o1}$, the DC fiber having a refractive index profile;

   CHARACTERIZED IN THAT

   said refractive index profile is selected such that the DC fiber does not support propagation of radiation of wavelength $\lambda_{op}$ in a $LP_{11}$ higher order mode and supports propagation of radiation of wavelength $\lambda_{op}$ in a $LP_{02}$ higher order mode, wherein the DC fiber has a core (11) having a normalized maximum refractive index difference $\Delta_c > 0$, the core contactingly surrounded by a cladding comprising, in outwardly directed sequence, a first cladding region (12) having normalized refractive index difference $\Delta_1 < 0$, a second cladding region (13) having normalized refractive index difference $\Delta_2$ selected such that $0 < \Delta_2 < \Delta_c$, and a third cladding region having normalized refractive index difference $\Delta_3 < \Delta_2$.

2. The article of claim 1, wherein $\Delta_c > 0.015$, $\Delta_1 < -0.003$ and $\Delta_3 = 0$.

3. The article of claim 1, wherein said third cladding region extends to the surface of the DC fiber, and wherein $\Delta_3$ is substantially constant as a function of radial distance.

4. The article of claim 1, wherein the DC fiber comprises at least one rare earth species capable of stimulated emission at the wavelength $\lambda_{op}$, and wherein the article comprises means for coupling pump radiation of wavelength $< \lambda_{op}$ into the DC fiber.

5. The article of claim 4, wherein $\lambda_{op}$ is about 1.55 μm and the rare earth species is Er.

6. The article of claim 1, wherein the article is an optical fiber communication system that comprises a source (11) of radiation of wavelength $\lambda_{op}$, detector means (16) for detecting radiation of wavelength $\lambda_{op}$ that are spaced from said source of radiation, and an optical fiber transmission path (13, 17 and 18) that radiation-transmissively links said source and said detector means, with said optical fiber transmission path comprising a length $L_{DC}$ of DC fiber (17), and further comprising a length $L_{SM}$ of single mode optical fiber (13) having chromatic dispersion per unit length $D_{SM}(\lambda_{op})$ at $\lambda_{op}$, with $L_{DC}$ and $L_{SM}$ selected such that $L_{DC} \cdot D_{DC}(\lambda_{op}) + L_{SM} \cdot D_{SM}(\lambda_{op})$ is approximately equal to zero, where $D_{SM}(\lambda_{op})$ is the chromatic dispersion per unit length of the single mode fiber of $\lambda_{op}$.

7. The article of claim 6 wherein the refractive index profile is further selected such that the absolute value of $(L_{DC} \cdot D_{DC}(\lambda) + L_{SM} \cdot D_{SM} \cdot (\lambda))/(L_{DC} + L_{SM})$ is less than 1.5 ps/nm·km for all wavelengths $\lambda$ in a wavelength range that is greater than 50 nm and includes $\lambda_{op}$.

## Patentansprüche

1. Anordnung mit einem Abschnitt dispersionskompensierender DC-Lichtleitfaser, die so ausgelegt ist, daß die Ausbreitung von Strahlung der Wellenlänge $\lambda_{op}$ in einer Grundschwingungsart $LP_{o1}$ unterstützt wird, wobei die DC-Faser ein Brechungsindexprofil aufweist;

   dadurch gekennzeichnet, daß

   das besagte Brechungsindexprofil so ausgewählt ist, daß die DC-Faser eine Ausbreitung von Strahlung der Wellenlänge $\lambda_{op}$ in Schwingungsart $LP_{11}$ höherer Ordnung nicht unterstützt und die Ausbreitung von Strahlung der Wellenlänge $\lambda_{op}$ in einer Schwingungsart $LP_{02}$ höherer Ordnung unterstützt, wobei die DC-Faser einen Kern (11) mit einer normierten maximalen Brechungsindexdifferenz $\Delta_c$ > 0 aufweist, wobei der Kern konaktierend von einem Mantel umgeben wird, der in der nach außen gerichteten Reihenfolge einen ersten Mantelbereich (12) mit einer normierten Brechungsindexdifferenz $\Delta_1$ < 0, einen zweiten Mantelbereich (13) mit einer dergestalt ausgewählten normierten Brechungsindexdifferenz $\Delta_2$, daß $0 < \Delta_2 < \Delta_c$ ist, und einen dritten Mantelbereich mit einer normierten Brechungsindexdifferenz $\Delta_3 < \Delta_2$ aufweist.

2. Anordnung nach Anspruch 1, wobei $\Delta_c$ > 0,015, $\Delta_1$ < -0,003 und $\Delta_3$ = 0 ist.

3. Anordnung nach Anspruch 1, wobei sich der besagte dritte Mantelbereich zu der Oberfläche der DC-Faser erstreckt und wobei $\Delta_3$ im wesentlichen als eine Funktion des radialen Abstands konstant ist.

4. Anordnung nach Anspruch 1, wobei die DC-Faser mindestens eine Seltenerdspezies umfaßt, die zu einer angeregten Emission mit der Wellenlänge $\lambda_{op}$ in der Lage ist und wobei die Anordnung Mittel zum Einkoppeln von Pumpstrahlung mit einer Wellenlänge < $\lambda_{op}$ in die DC-Faser umfaßt.

5. Anordnung nach Anspruch 4, wobei $\lambda_{op}$ etwa 1,55 μm beträgt und die Seltenerdspezies Er ist.

6. Anordnung nach Anspruch 1, wobei die Anordnung ein Lichtleitfaserkommunikationssystem ist, das eine Quelle (11) von Strahlung der Wellenlänge $\lambda_{op}$, Detektormittel (16) zur Erkennung von Strahlung der Wellenlänge $\lambda_{op}$, die von der besagten Quelle von Strahlung beabstandet sind, und einen Lichtleitfaserübertragungsweg (13, 17 und 18), der strahlungs-durchlässig die besagte Quelle und die besagten Detektormittel verbindet, umfaßt, wobei der besagte Lichtleitfaserübertragungsweg einen Abschnitt $L_{DC}$ der DC-Faser (17) umfaßt und ferner einen Abschnitt LSM der Einmodenlichtleitfaser (13) mit einer chromatischen Dispersion $D_{SM}(\lambda_{op})$ pro Einheitslänge bei $\lambda_{op}$ umfaßt, wobei $L_{DC}$ und $L_{SM}$ so ausgewählt sind, daß $L_{DC} \cdot D_{DC}(\lambda_{op}) + L_{SM} \cdot D_{SM}(\lambda_{op})$ ungefähr gleich null ist, wobei $D_{SM}(\lambda_{op})$ die chromatische Dispersion pro Einheitslänge der Einmodenfaser von $\lambda_{op}$ ist.

7. Anordnung nach Anspruch 6, wobei das Brechungsindexprofil weiterhin so ausgewählt ist, daß der Absolutwert von $(L_{DC} \cdot D_{DC}(\lambda) + L_{SM} \cdot D_{SM}(\lambda))/(L_{DC} + L_{SM})$ für alle Wellenlängen $\lambda$ in einem Wellenlängenbereich, der größer als 50 nm ist und $\lambda_{op}$ enthält, kleiner als 1,5 ps/nm ·km ist.

## Revendications

1. Article comprenant une longueur de fibre optique à compensation de dispersion DC conçue pour supporter la propagation d'un rayonnement de longueur d'onde $\lambda_{op}$ dans un mode fondamental $LP_{01}$, la fibre DC ayant un profil d'indice de réfraction ;

CARACTERISE EN CE QUE

ledit profil d'indice de réfraction est sélectionné de telle sorte que la fibre DC ne supporte pas la propagation d'un rayonnement de longueur d'onde $\lambda_{op}$ dans un mode d'ordre supérieur $LP_{11}$ et supporte la propagation d'un rayonnement de longueur d'onde $\lambda_{op}$ dans un mode d'ordre supérieur $LP_{02}$, dans lequel la fibre DC a un coeur (11) ayant une différence d'indice de réfraction maximum normalisée $\Delta_c$ > 0, le coeur étant entouré avec contact par une gaine comprenant, dans une séquence dirigée vers l'extérieur, une première région de gaine (12) ayant une différence d'indice de réfraction normalisée $\Delta_1$ < 0, une deuxième région de gaine (13) ayant une différence d'indice de réfraction normalisée $\Delta_2$ sélectionnée de telle sorte que $0 < \Delta_2 < \Delta_c$, et une troisième région de gaine ayant une différence d'indice de réfraction normalisée $\Delta_3 < \Delta_2$.

2. Article selon la revendication 1, dans lequel $\Delta_c$ > 0,015, $\Delta_1$ < -0,003 et $\Delta_3$ = 0.

3. Article selon la revendication 1, dans lequel ladite troisième région de gaine s'étend jusqu'à la surface de la fibre DC, et dans lequel $\Delta_3$ est substantiellement constant en fonction de la distance radiale.

4. Article selon la revendication 1, dans lequel la fibre DC comprend au moins une espèce de terre rare capable d'émission stimulée à la longueur d'onde $\lambda_{op}$, et dans lequel l'article comprend un moyen pour coupler un rayonnement de pompage d'une longueur d'onde < $\lambda_{op}$ dans la fibre DC.

5. Article selon la revendication 4, dans lequel $\lambda_{op}$ est environ 1,55 μm et l'espèce de terre rare est l'Er.

6. Article selon la revendication 1, dans lequel l'article est un système de communication à fibres optiques qui comprend une source (11) de rayonnement de longueur d'onde $\lambda_{op}$, des moyens de détection (16) pour détecter un rayonnement de longueur d'onde $\lambda_{op}$ qui sont espacés de ladite source de rayonnement, et un trajet de transmission par fibres optiques (13, 17 et 18) qui relie transmissivement par rayonnement ladite source et lesdits moyens de détection, ledit trajet de transmission par fibres optiques comprenant une longueur $L_{DC}$ de fibre DC (17), et comprenant en outre une longueur $L_{SM}$ de fibre optique monomode (13) ayant une dispersion chromatique par unité de longueur de $D_{SM}(\lambda_{op})$ à

$\lambda_{op}$, $L_{DC}$ et $L_{SM}$ étant sélectionnées de telle sorte que $L_{DC}.D_{DC}(\lambda_{op}) + L_{SM}.D_{SM}(\lambda_{op})$ soit approximativement égal à zéro, où $D_{SM}(\lambda_{op})$ est la dispersion chromatique par unité de longueur de la fibre monomode de $\lambda_{op}$.

7. Article selon la revendication 6, dans lequel le profil d'indice de réfraction est en outre sélectionné de telle sorte que la valeur absolue de $(L_{DC}.D_{DC}(\lambda) + L_{SM}.D_{SM}(\lambda))/(L_{DC} + L_{SM})$ soit inférieure à 1,5 ps/nm.km pour toutes les longueurs d'onde $\lambda$ dans une gamme de longueurs d'onde qui est supérieure à 50 nm et comporte $\lambda_{op}$.

FIG. 1

100 ARB UNITS = 1.90 μm in FIBER

DELTA

11
12
13

RADIUS (ARB UNITS)

FIG. 2

DISPERSION
(ps/nm-km)

WAVELENGTH (nm)

FIG. 3

14

TRANSMITTER
11
12
13
13
13
15
16
RECEIVER
17
19
18

*FIG. 4*

*FIG. 5*